# EUROPÄISCHE PATENTSCHRIFT

(11) **EP 0 559 165 B1**
(45) Veröffentlichungstag und Bekanntmachung des Hinweises auf die Patenterteilung: **21.08.1996**
(21) Anmeldenummer: 93103357.5
(22) Anmeldetag: 03.03.1993
(51) Int. Cl.: B60P 3/36, B60P 3/32, F16B 11/00

(54) **Kunststoff-Formkörper zur Möbelbefestigung in Wohnwagen**
Plastic moulding for mounting of furniture in caravans
Elément moulé en plastique pour la fixation de meubles dans une caravane

(30) Priorität: 03.03.1992 DE 9202774 U
(43) Veröffentlichungstag der Anmeldung: 08.09.1993
(73) Patentinhaber: DETHLEFFS GmbH, D-88316 Isny (DE)
(72) Erfinder: Schmidt, Gerhard, W-7972 Isny (DE)
(74) Vertreter: Patentanwälte Eisele, Otten & Roth

(56) Entgegenhaltungen:
- DE-U- 9 007 182
- FR-A- 2 571 007
- US-A- 4 729 705

## Beschreibung

Die Erfindung betrifft einen Kunststoff-Formkörper nach dem Oberbegriff des Anspruchs 1. Ein solche Vorrichtung ist, zum Beispiel, aus dem Dokument DE-U-90 07 182.4 bekannt.

Grundsätzlich befaßt sich die Erfindung mit dem Problem der Befestigung eines Gegenstandes an einer Sandwichplatte mit verhältnismäßig weichem Kern. Aus der Figur 5 des Dokumentes US-A-4 729 705 ist ein Formkörper zur Befestigung eines Gegenstandes an eine Sandwichplatte mit weichen Kern bekannt, wobei der Formkörper einen Auflageflansch und einen mit Umfangsrillen versehenen Verankerungszapfen aufweist. Dieser ist dazu bestimmt durch ein Loch in der Deckschicht mit einem kleineren Durchmesser als der eigene in die weiche Kernschicht einzugreifen und verleimt zu werden. Insbesondere im Wohnwagenbau werden die Möbel an den Außenwänden befestigt, die einen Kern aus Hartschaumstoff und an der Wageninnenseite eine Deckschicht aus Sperrholz aufweisen. Die äußere Deckschicht dieser als Außenwände verwendeten mehrschichtigen Platten ist ein Aluminiumblech, das gleichzeitig die Außenhaut des Wohnwagens bildet. Es ist bekannt, Sitztruhen, d.h. die Unterbauten der Sitzbänke, an den Außenwänden dadurch sicher zu verankern, daß in Höhe der Befestigungsstellen eine horizontale Holzleiste in die Wandplatte eingelegt ist. In diese Leiste werden dann Holzschrauben eingeschraubt. Das Einfügen der Holzleiste, welche die gleiche Dicke wie die Kernschicht hat, erfolgt bei der Fertigung der Wandplatten. Die Kernschicht aus Hartschaumstoff ist insoweit unterbrochen.

Nachteilig ist einerseits der mit dem Einlegen der Holzleiste verbundene zusätzliche Arbeitsaufwand. Vor allem aber hat sich gezeigt, daß die Leisten sich im Laufe der Zeit in unschöner Weise an der Außenhaut abbilden. Das verhältnismäßig weiche Aluminiumblech zeigt dann entlang der Leiste flache Kanten oder rippenartige Strukturen, die bei entsprechender Beleuchtung an der ebenen und glatten Außenfläche gut sichtbar sind.

Der Erfindung liegt die Aufgabe zugrunde, die Verankerungsleisten zu vermeiden und statt dessen eine einfache und zweckentsprechende Befestigungsmöglichkeit zu schaffen, die vor allem Zugkräfte in zur Platte senkrechter Richtung aufzunehmen bzw. in die Wandplattenstruktur einzuleiten vermag.

Diese Aufgabe wird erfindungsgemäß mit Hilfe eines Kunststoff-Formkörpers nach dem Anspruch 1 gelöst. Dabei wird die Verankerungskraft nicht mit Hilfe von Schrauben sondern durch Verleimen erzeugt. Der Formkörper hat einen Auflageflansch und wenigstens einen mit Umfangsrillen versehenen Verankerungszapfen, der dazu bestimmt ist, durch die Deckschicht hindurch in die Kernschicht der Wandplatte einzugreifen und verleimt zu werden. Der Verankerungszapfen sollte einen größeren Durchmesser als übliche Dübel haben. Er verbindet sich mittels des selbsthärtenden Leims mit dem Hartschaumstoff der Kernschicht und mit der Sperrholz-Deckschicht. Der entscheidende Effekt besteht jedoch darin, daß beim Eindrücken des Verankerungszapfens in die vorgebohrte, leimgefüllte Vertiefung der Leim den Schaumstoff radial auseinanderdrückt und schließlich nach dem Erhärten der Leim um den Verankerungszapfen herum einen Ringwulst bildet, der sich auf der Innenseite gegen die Deckschicht legt und ein Herausziehen des Verankerungszapfens sehr wirksam verhindert.

Damit überschüssiger Leim, der möglicherweise durch das Zapfenloch in der Deckschicht austritt, den Auflageflansch des Formkörpers nicht unterwandert und die saubere Auflage stört, wird vorgeschlagen, daß der Verankerungszapfen in Höhe des Auflageflansches von einem Hohlraum umgeben ist.

An dem Formkörper seinerseits können beliebige Gegenstände befestigt und der Formkörper kann dazu speziell gestaltet werden. Zweckmäßig ist es, wenn der Formkörper eine zur Fläche seines Auflageflansches parallele und eine dazu senkrechte Befestigungsfläche aufweist. Örtliche Verdickungen der Formkörperwand können zur besseren Halterung von eingedrehten Befestigungsschrauben vorgesehen sein. Der Formkörper kann beispielsweise zusätzlich zu seiner Hauptfunktion als Schellenunterteil zur Befestigung eines Schlauches ausgebildet sein.

Als bevorzugte, besonders zweckmäßige Lösung wird vorgeschlagen, den Formkörper zur gemeinsamen Befestigung einer Hinterlüftungsplatte, des Scharniers eines Sitztruhendeckels, einer Deckelauflageleiste und als Schellenunterteil zur Befestigung eines Heizschlauches zu gestalten.

Ein Ausführungsbeispiel der Erfindung wird nachfolgend anhand der Zeichnung erläutert. Dabei wird ein Kunststoff-Formkörper vorgestellt, der in der zuvor erwähnten Weise zur Komplettbefestigung einer Sitztruhenanordnung dient. Im einzelnen zeigt
- Fig. 1: einen Längsschnitt des Formkörpers,
- Fig. 2: eine Ansicht des Formkörpers nach Fig. 1 in Richtung A und
- Fig. 3: eine teilweise aufgebrochene Seitenansicht des fertig eingebauten Formkörpers mit Vertikalschnitten der aneinander befestigten Wohnwagen-Bauteile.

Die Figuren sind alle in etwa natürlicher Größe gehalten.

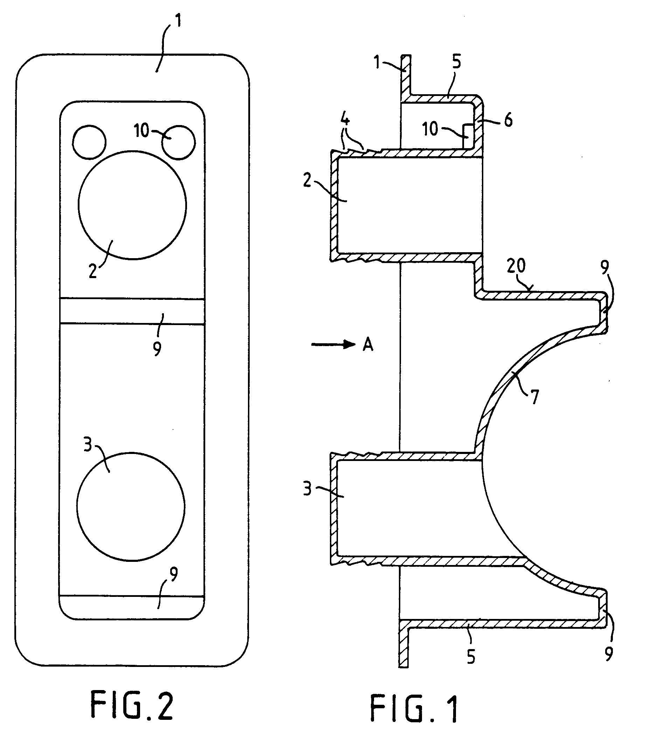

Der dargestellte, aus Kunststoff gespritzte Formkörper hat einen rechteckig umlaufenden Auflageflansch 1 und zwei hohlzylindrische Verankerungszapfen 2 und 3. Die in Fig. 2 sichtbare Seite wird auf eine Verbundplatte aufgelegt. Die Verankerungszapfen sind an der in den Kernbereich eindringenden Seite durch je eine Stirnwand geschlossen. Querschnittlich flach sägezahnförmige Rillen 4 umgeben die Verankerungszapfen 2 und 3 im Eindringbereich. Die Querschnittsform der Rillen bzw. Ringkanten hat formtechnische Gründe. Sie erleichtert das Lösen des Formlings aus der Spritzform. Die Rillen könnten auch wellenförmig und sonstwie gestaltet sein.

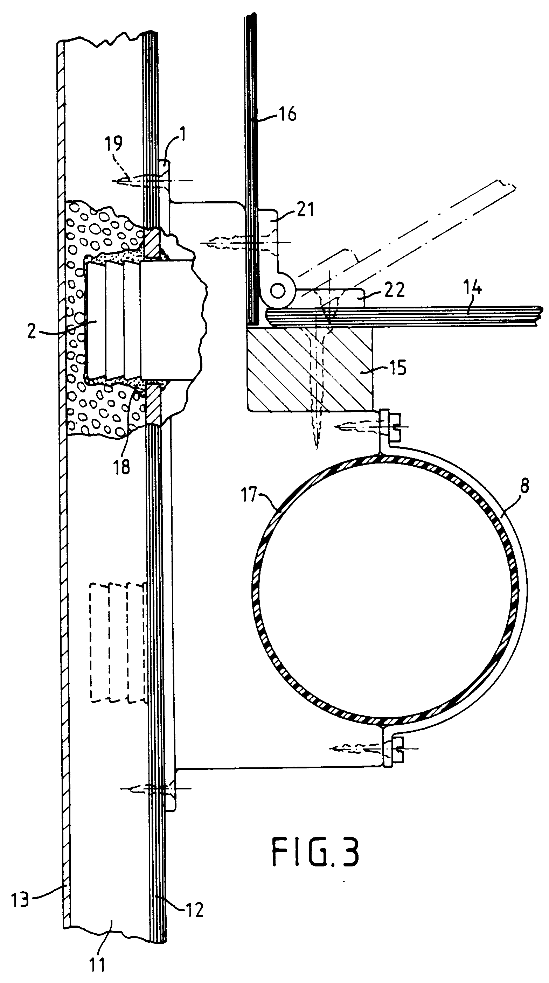

Ein kastenartiges Mittelteil verbindet die offenen Ränder der Verankerungszapfen 2, 3 mit dem Auflageflansch 1. Dieses Mittelteil schließt mit einer Umfassungswand 5 an die Rechteckform des Flansches an und geht dann in der oberen, den Verankerungszapfen 2 umgebenden Partie in eine zum Auflageflansch parallele Wand 6 über. Die untere, den Verankerungszapfen 3 umgebende Partie ist weiter erhöht und als halbzylindrische Rinnenwand 7 ausgebildet, die als Schellenunterteil dient, wobei, wie Fig. 3 zeigt ein Schellenoberteil 8 auf zwei schmalen Rückenwänden 9 aufsitzt. An zwei besonders kritischen Stellen ist die Wand 6 an der Innenseite durch Verstärkungsnoppen 10 verdickt.

Fig. 3 zeigt im Schnitt die Außenwand eines Wohnwagens. Ihre Kernschicht 11 besteht aus einem Partikelschaumstoff aus Polystyrol. Die Deckschicht 12 an der Wageninnenseite ist Sperrholz und die Deckschicht 13 an der Wagenaußenseite Aluminiumblech. Die Sitztruhe, um deren Befestigung es geht, hat einen aufklappbaren Deckel 14 aus Sperrholz, der auf einer Auflageleiste 15 ruht und die Sitz- oder Schlafpolster trägt. Zur Behaglichkeit dient eine Hinterlüftungsplatte 16, ebenfalls aus Sperrholz, die in einem Abstand von der Außenwand installiert ist, wobei ein durch einen Heizschlauch 17 herbeigeführter Warmluftstrom zwischen der Außenwand und der Hinterlüftungsplatte 17 aufsteigt.

Vor der Montage des Formkörpers werden in entsprechendem Abstand übereinander von der Wageninnenseite her zwei dem Durchmesser und der Eingreiftiefe der Verankerungszapfen 2 und 3 entsprechende Bohrungen angebracht. Nachdem in jede dieser stumpfen Bohrungen ein Quantum eines fest aushärtenden Leims eingefüllt ist, wird der Formkörper mit seinen Verankerungszapfen in die Löcher eingesteckt und mit Hilfe von vier kleinen Schrauben 19 an der Deckschicht 12 der Außenwand in satter Auflage gehalten. Diese Schrauben 19 sind jedoch nur ein Montagehilfsmittel. Die entscheidende belastungsfähige Verankerung ergibt sich wie folgt. Beim Eindrücken der Verankerungszapfen wird der Leim 18 in den Schaumstoff der Kernschicht verdrängt und insbesondere sammelt er sich an der Innenseite der Deckschicht 12. Diese Leimwulst stützt sich wirkungsvoll an der Deckschicht 12 ab und hält größten Zugbelastungen auf die Verankerungszapfen 2 und 3 stand. Wenn ein Teil des Leims durch die Zapfenlöcher nach außen dringt, trägt dies nur zur Festigkeit bei. Infolge des dem Zapfen an der Außenseite umgebenden Hohlraums wird die satte Auflage des Auflageflansches 1 nicht beeinträchtigt.

Durch Aufschrauben des Schellenoberteils 8 kann der Heizschlauch 17 an den Formteilen mit befestigt werden. Die Auflageleiste 15 ruht auf der am Formkörper ausgebildeten horizontalen Fläche 20 und wird zur Befestigung angeschraubt. Die Hinterlüftungsplatte 16 wird an der Wand 6 des Formkörpers angelegt und zusammen mit einem Scharnierteil 21 unter Zuhilfenahme der Verstärkungsnoppen 10 angeschraubt. Diese Verbindung ist wegen der beim Bremsen auftretenden Horizontalkräfte besonders kritisch. Der andere Scharnierteil 22 wird mit dem Truhendeckel 14 verschraubt.
- 1: Auflageflansch
- 2: Verankerungszapfen
- 3: Verankerungszapfen
- 4: Rillen
- 5: Umfassungswand
- 6: Wand
- 7: Rinnenwand
- 8: Schellenoberteil
- 9: Rückenwand
- 10: Verstärkungsnoppe
- 11: Kernschicht
- 12: Deckschicht, innen
- 13: Deckschicht, außen
- 14: Deckel
- 15: Auflageleiste
- 16: Hinterlüftungsplatte
- 17: Heizschlauch
- 18: Leim
- 19: Schraube
- 20: Fläche
- 21: Scharnierteil
- 22: Scharnierteil

## Patentansprüche

1. Kunststoff-Formkörper zur Befestigung eines Gegenstandes, insbesondere eines Möbelteils, an der inneren Oberfläche der Außenwand eines Wohnwagens, wobei diese als Sandwichplatte (11, 12, 13) ausgebildet ist mit einer Außenschicht (13), einer Kernschicht (11) aus einem Hartschaumstoff und einer Deckschicht (12) aus Sperrholz an der Wageninnenseite, dadurch gekennzeichnet, daß der Formkörper einen Auflageflansch (1) und wenigstens einen mit Umfangsrillen (4) versehenen Verankerungszapfen (2, 3) aufweist, der dazu bestimmt ist, durch ein Zapfenloch der Deckschicht (12) vom grösseren Durchmesser als der eigene hindurch in die Kernschicht (11) einzugreifen und verleimt (18) zu werden.

2. Formkörper nach Anspruch 1, dadurch gekennzeichnet, daß der Verankerungszapfen (2, 3) in Höhe des Auflageflansches (1) von einem Hohlraum umgeben ist.

3. Formkörper nach Anspruch 1, dadurch gekennzeichnet, daß er eine zur Fläche des Auflageflansches (1) parallele und eine dazu senkrechte Befestigungsfläche (6, 20) aufweist.

4. Formkörper nach Anspruch 1, dadurch gekennzeichnet, daß örtliche Verdickungen (10) der Formkörperwand zur Halterung von eingedrehten Befestigungsschrauben vorgesehen sind.

5. Formkörper nach Anspruch 1, dadurch gekennzeichnet, daß er die halbrunde Form eines Schellenunterteils hat.

6. Formkörper nach einem der vorhergehenden Ansprüche, dadurch gekennzeichnet, daß er als gemeinsames Befestigungsmittel einer Hinterlüftungsplatte (16), des Scharniers (21, 22) eines Sitztruhendeckels (14), einer Deckelauflageleiste (15) und als Schellenunterteil zur Befestigung eines Heizschlauches (17) gestaltet ist.

## Claims

1. Plastic moulding for mounting an object, in particular a piece of furniture, on the inside surface of the exterior wall of a caravan, whereby the latter is designed as a sandwich panel (11, 12, 13) with an outer layer (13), a core layer (11) made of a rigid foam and a cover layer (12) made of plywood on the inside of the caravan, characterised in that the moulding has a bearing flange (1) and at least one anchoring pin (2, 3) with peripheral grooves (4) which is designed to pass through a pin hole in the cover layer (12) of larger diameter than itself into the core layer (11) and be glued (18).

2. Moulding according to claim 1, characterised in that the anchoring pin (2, 3) is surrounded at the height of the bearing flange (1) by a hollow cavity.

3. Moulding according to claim 1, characterised in that it comprises one attachment surface (6, 20) parallel to the surface of the bearing flange (1) and a second attachment surface perpendicular thereto.

4. Moulding according to claim 1, characterised in that there are local thickened parts (10) in the moulding wall for mounting grooved fastening screws.

5. Moulding according to claim 1, characterised in that it has the semi-circular shape of a lower part of a bracket.

6. Moulding according to one of the preceding claims, characterised in that it is designed as a common attachment means for a rear ventilation plate (16), the hinge (21, 22) of a seat box lid (14) and a lid support beam (15) and as a lower bracket part for attaching a heating hose (17).

## Revendications

1. Elément moulé en matière synthétique pour la fixation d'un objet, en particulier d'un meuble, à la surface interne de la paroi externe d'une caravane, celle-ci étant réalisée sous forme de plaque sandwich (11,12,13) ayant une couche externe (13), une couche centrale (11) en une matière en mousse dure, et une couche de recouvrement (12) en contreplaqué sur la face interne de la caravane,
caractérisé en ce que l'élément moulé présente une bride de support (1) et au moins une cheville d'ancrage (2,3) munie de rainures périphériques (4), qui est destinée à s'engager à travers un trou pour la cheville de la couche de recouvrement (12) de plus grand diamètre que celle-ci dans la couche centrale (11) et à y être collée (18).

2. Elément moulé selon la revendication 1,
caractérisé en ce que la cheville d'ancrage (2,3) est entourée, au niveau de la bride de support (1), par une cavité.

3. Elément moulé selon la revendication 1,
caractérisé en ce qu'il présente une surface de fixation parallèle à la surface de la bride de support (1) et une surface de fixation perpendiculaire à celle-ci (6,20).

4. Elément moulé selon la revendication 1,
caractérisé en ce que des épaississements locaux (10) de la paroi de l'élément moulé sont prévus pour le maintien de vis de fixation posées.

5. Elément moulé selon la revendication 1,
caractérisé en ce qu'il présente la forme semi-circulaire d'un dessous de collier.

6. Elément moulé selon une des revendications précédentes,
caractérisé en ce qu'il est constitué comme moyen de fixation commun d'une plaque d'aération arrière (16), de la charnière (21,22) d'un couvercle de meuble (14), d'une baguette de support de couvercle (15) et comme dessous de collier pour la fixation d'un tuyau de chauffage (17).
